# EUROPEAN PATENT SPECIFICATION

(11) **EP 3 855 057 B1**
(45) Date of publication and mention of the grant of the patent: **15.03.2023**
(21) Application number: 18934007.8
(22) Date of filing: 28.12.2018
(51) Int. Cl.: F16L 33/22, F16L 13/02, F16L 33/207, F16L 15/00

(54) **PIPE JOINT AND METHOD FOR USING SAME**
ROHRVERBINDUNG UND VERFAHREN ZU IHRER VERWENDUNG
RACCORD DE TUYAU ET SON PROCÉDÉ D'UTILISATION

(30) Priority: 21.09.2018 CN 201811104432
(43) Date of publication of application: 28.07.2021
(73) Proprietor: Huizhou Hydro Caresys Medical Co. Ltd, Huizhou, Guangdong 516083 (CN)
(72) Inventor: WU, Yan, Guangdong 516083 (CN); SUN, Guangyu, Guangdong 516083 (CN)
(74) Representative: Meyer, Thorsten
(86) International application number: PCT/CN2018/125113
(87) International publication number: WO 2020/057005

(56) References cited:
- CN-A- 109 084 107
- CN-U- 205 859 435
- DE-U1-202007 012 419
- JP-A- 2010 019 395
- US-A1- 2008 023 930
- US-A1- 2008 277 931
- US-A1- 2012 274 064

## Description

### TECHNICAL FIELD

The invention relates to the technical field of pipeline connection, in particular to a pipe joint and a method for using the same.

### BACKGROUND

At present, flexible pipes and rigid pipes are often connected with specially made steel-plastic conversion joints so as to achieve their respective homogeneous connections. The connections can be homogeneous welding, threaded connections and so on. In order to prevent the joints from loosening, there are two types of joints in the prior art: one is a new type of shell-type steel-plastic joint in which a bushing inserted into a flexible pipe is provided with inverted teeth, the other is micro flow high-pressure fluid pipe joint which is sealed and connected by adding a sealing ring and a threaded sleeve.

However, the above two types of joints have many shortcomings: special joint fittings need to be manufactured with special molds, which increases costs; and the flexible pipe may become concave during insertion of the bushing with inverted teeth or in the process of screwing the threaded sleeve, which causes the internal flow channel narrowed, leading to deformation of the fluid passing through and loss of energy. The inward concave of the flexible pipe is more obvious especially when the bushing or threaded sleeve is thin-walled. These shortcomings all limit normal use of connection between flexible pipes and rigid pipes. Furthermore, US2008/0277931A1 discloses a connection between a largely rigid pipeline and a flexible conduit element by means of a steel nipple, reaching with its one end into the pipeline and with its opposite end into the flexible conduit element, wherein the flexible conduit element is secured to the nipple by means of a clamping sleeve.

### SUMMARY

In order to solve the aforementioned technical problems, a pipe joint and a method for using the same are provided in the invention. The pipe joint improves stability of the connection between a flexible pipe and a rigid pipe, and also solves the problem that an internal flow channel is narrowed due to inward concave of the flexible pipe; in addition, the pipe joint has a simple structure and low manufacturing cost, and is easy to use.

Based on this, a pipe joint provided in the invention comprises a joint body within which a cavity channel and an outer hole channel are provided, the cavity channel is formed at one end of the joint body a first outer insertion opening for insertion of a flexible pipe to be connected, and the outer hole channel is formed at the other end of the joint body a second outer insertion opening for insertion of a rigid pipe to be connected;

an inner hole channel is further communicated between the cavity channel and the outer hole channel, the inner hole channel forms an inner insertion opening at an innermost end of the cavity channel and forms a communication opening at an innermost end of the outer hole channel, a filter screen being provided at the communication opening; an liner pipe is provided in the cavity channel, one end of the liner pipe is inserted into the inner hole channel through the insertion opening, the other end of the liner pipe is provided with a connection section to be inserted into the flexible pipe, the connection section is provided with at least one bulging part, and a length of the liner pipe other than the connecting section is in a range from 0.1 to 50 mm.

In a preferred embodiment, the outer hole channel is a threaded hole.

In a preferred embodiment, the flexible pipe is a high-pressure braided pipe including three layers, the inner and outer layers are plastic pipes, and the intermediate layer is a braided mesh pipe.

In a preferred embodiment, the rigid pipe is a metal pipe.

The invention also provides a method for using a pipe joint above, which comprises the following steps:
Step 1: inserting a connecting section of a liner pipe into a flexible pipe;
Step 2: inserting the flexible pipe and the liner pipe together into a cavity channel of a joint body from a first outer insertion opening, and at the same time inserting an end of the liner pipe outside the flexible pipe into an inner hole channel of the joint body from an inner insertion opening;
Step 3: squeezing to deform the joint body, and compressing the flexible pipe so that an outer wall of the flexible pipe closely contacts with a side wall of the cavity channel; and
Step 4: inserting a rigid pipe into an outer hole channel of the joint body from a second outer insertion opening, and then fixing the rigid pipe by circumferential welding to complete connection of the rigid pipe and the flexible pipe.

Implementing the embodiments of the present invention has the following beneficial effects:
The pipe joint provided in the invention comprises a joint body within which a cavity channel and an outer hole channel are provided, the cavity channel forms at one end of the joint body a first outer insertion opening for insertion of a flexible pipe to be connected, the outer hole channel forms at the other end of the joint body a second outer insertion opening for insertion of a rigid pipe to be connected; an inner hole channel is further communicated between the cavity channel and the outer hole channel, the inner hole channel forms an inner insertion opening at an innermost end of the cavity channel and forms a communication opening at an innermost end of the outer hole channel; an liner pipe is provided in the cavity channel, one end of the liner pipe is inserted into the inner hole channel through the inner insertion opening, and the other end of the liner pipe is provided with a connection section to be inserted into the flexible pipe, and the connection section is provided with at least one bulging part. With such configuration, the bulging part inserted into the flexible pipe can squeeze the pipe wall of the flexible pipe to make it closely contact with the side wall of the cavity channel, thereby realizing a stable and sealed connection between the flexible pipe and the rigid pipe; at the same time, the liner pipe also has the function of supporting the flow channel, which can ensure that the flexible pipe inserted into the cavity channel will not be concave and deformed, thereby solving the problem of narrowed internal flow channel and ensuring smoothness of the internal flow channel. Further, the energy lost when the fluid passes through can be reduced, and the ability of the pipe joint to withstand ultra-high pressure can be improved. In addition, the pipe joint provided in the invention has the advantages of simple structure, low production cost, convenient use, and the like.

A method for using a pipe joint above provided in the invention has the advantages of being simple, convenient and easy to implement.

### BRIEF DESCRIPTION OF DRAWINGS

FIG. 1 is a schematic cross-sectional structure diagram of a pipe joint according to an embodiment of the invention; and
FIG. 2 is a structural diagram showing how to use a pipe joint according an embodiment of the invention.

List of reference numerals:
1, joint body; 11, cavity channel; 12, outer hole channel; 13, first outer insertion opening; 14, second outer insertion opening; 15, inner hole channel; 16, inner insertion opening; 17, communication opening; 18, filter screen; 2, flexible pipe; 3, rigid pipe; 4, liner pipe; and 41, bulging part.

### DETAILED DESCRIPTION

Hereafter, the technical solutions in embodiments of the invention will be described clearly and completely in conjunction with the accompanying drawings in the embodiments of the invention. Obviously, the described embodiments are only a part of the embodiments of the invention, rather than all the embodiments.

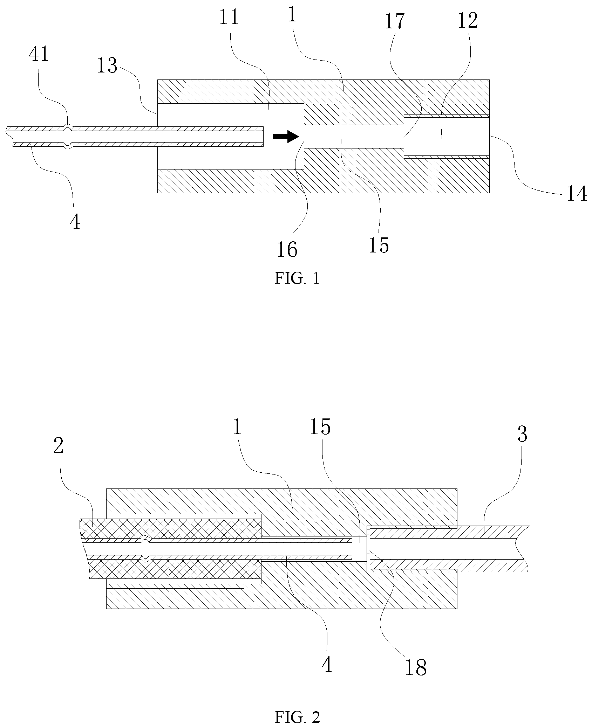

Refer to FIGs. 1 and 2. A pipe joint provided according to an embodiment of the invention comprises a joint body 1 within which a cavity channel 11 and an outer hole channel 12 are provided. The cavity channel 11 forms at one end of the joint body 1 a first outer insertion opening 13 for insertion of a flexible pipe 2 to be connected, and the outer hole channel 12 forms at the other end of the joint body 1 a second outer insertion opening 14 for insertion of a rigid pipe 3 to be connected. An inner hole channel 15 is further communicated between the cavity channel 11 and the outer hole channel 12. The inner hole channel 15 forms an inner insertion opening 16 at an innermost end of the cavity channel 11, and forms a communication opening 17 at an innermost end of the outer hole channel 12. An liner pipe 14 difficult to deform, such as a metal pipe, is provided in the cavity channel 11. One end of the liner pipe 4 is inserted into the inner hole channel 15 through the inner insertion opening 16, and the other end of the liner pipe 4 is provided with a connection section to be inserted into the flexible pipe 2. The connection section is provided with at least one bulging part 41. A length of the liner pipe 4 other than the connecting section is in a range from 0.1 to 50 mm.

With such configuration, the bulging part 41 inserted into the flexible pipe 2 can squeeze the pipe wall of the flexible pipe 2 to make it closely contact with the side wall of the cavity channel 11, thereby realizing a stable and sealed connection between the flexible pipe 2 and the rigid pipe 3; at the same time, the liner pipe 4 also has the function of supporting the flow channel, which can ensure that the flexible pipe 2 inserted into the cavity channel 11 will not be concave and deformed, thereby solving the problem of narrowed internal flow channel and ensuring unobstructed internal flow channel. Further, the energy lost when the fluid passes through can be reduced, and the ability of the pipe joint to withstand ultra-high pressure can be improved.

Further, as shown in FIGs. 1 to 2, since an end of the flexible pipe 2 may be deformed during insertion into the cavity channel 11 and tiny particles will fall off the flexible pipe 2, a filter screen 18 is provided at the communication opening, which has a mesh range of 4 to 400 mesh. The filter screen 18 can filter the fluid flowing through the pipe joint to avoid the problem of bursting of the pipe joint due to blockage of tiny particles. In addition, in order to ensure stability of the connection between the rigid pipe 3 and the joint body 1, the outer hole channel 12 is a threaded hole with thread that can be English standard pipe thread (R), metric pipe thread (ZM or M), or national (American) pipe thread (NPT or NPSC).

It should be pointed out that the flexible pipe 2 to be connected in the embodiment of the invention refers to a high-pressure braided pipe which is mainly composed of plastic pipes and a braided mesh pipe. Specifically, the high-pressure braided pipe includes three layers, the inner and outer layers are plastic pipes, and the intermediate layer is a braided mesh pipe. The braided mesh pipe, which is made of environmentally friendly materials, has features of good abrasion resistance, expandability, smoothness, high pressure resistance, flame retardancy and ventilation and heat dissipation. In addition, the rigid pipe 3 to be connected in the embodiment of the present invention refers to a metal pipe.

A method for using a pipe joint above is also provided according to an embodiment of the invention, which comprises the following steps:
Step 1: inserting a connecting section of a liner pipe 4 into a flexible pipe 2;
Step 2: inserting the flexible pipe 2 and the liner pipe 4 together into a cavity channel 11 of a joint body 1 from a first outer insertion opening 13, and at the same time inserting an end of the liner pipe 4 outside the flexible pipe 2 into an inner hole channel 15 of the joint body 1 from an inner insertion opening 16;
Step 3: squeezing to deform the joint body 1, and compressing the flexible pipe 2 so that an outer wall of the flexible pipe 2 closely contacts with a side wall of the cavity channel 11; and
Step 4: inserting a rigid pipe 3 with external thread into an outer hole channel 12 of the joint body 1 from a second outer insertion opening 14, and then fixing the rigid pipe 3 by circumferential welding to complete connection of the rigid pipe 3 and the flexible pipe 2.

In summary, a pipe joint is provided in the invention, which comprises a joint body 1 within which a cavity channel 11 and an outer hole channel 12 are provided. The cavity channel 11 forms at one end of the joint body 1 a first outer insertion opening 13 for insertion of a flexible pipe 2 to be connected, and the outer hole channel 12 forms at the other end of the joint body 1 a second outer insertion opening 14 for insertion of a rigid pipe 3 to be connected. An inner hole channel 15 is further communicated between the cavity channel 11 and the outer hole channel 12. The inner hole channel 15 forms an inner insertion opening 16 at an innermost end of the cavity channel 11, and forms a communication opening 17 at an innermost end of the outer hole channel 12. An liner pipe 14 is provided in the cavity channel 11. One end of the liner pipe 4 is inserted into the inner hole channel 15 through the inner insertion opening 16, and the other end of the liner pipe 4 is provided with a connection section to be inserted into the flexible pipe 2. The connection section is provided with at least one bulging part 41. Compared with pipe joints in the prior art, the pipe joint in the invention has the following technical effects:
1. The stability of the connection between the flexible pipe 2 and the rigid pipe 3 is improved, and the problem of narrowed internal flow channel due to inward concave of the flexible pipe 2 is solved;
2. The filter screen 18 can prevent the pipe joint from bursting due to blockage of tiny particles; and
3. The pipe joint provided in the invention has advantages of simple structure, low production cost, and convenient use.

In addition, the method for using a pipe joint above provided in the invention has the advantages of being simple, convenient and easy to implement.

It should be understood that the terms "first", "second", etc. are used in the present invention to describe various information, but the information should not be limited to these terms. These terms are only used to distinguish the same type of information from each other. For example, without departing from the scope of the present invention, "first" information may also be referred to as "second" information, and similarly, "second" information may also be referred to as "first" information.

The above are only the preferred embodiments of the present invention. It should be pointed out that for those of ordinary skill in the art, several improvements and substitutions can be made without departing from the technical principle of the present invention, as defined by the appended claims.

## Claims

1. A pipe joint, wherein the pipe joint comprises a joint body (1) within which a cavity channel (11) and an outer hole channel (12) are provided, the cavity channel (11) forming at one end of the joint body (1) a first outer insertion opening (13) for insertion of a flexible pipe (2) to be connected, and the outer hole channel (12) forming at the other end of the joint body (1) a second outer insertion opening (14) for insertion of a rigid pipe (3) to be connected;
an inner hole channel (15) is further communicated between the cavity channel (11) and the outer hole channel (12), the inner hole channel (15) forming an inner insertion opening (16) at an innermost end of the cavity channel (11) and forming a communication opening (17) at an innermost end of the outer hole channel (12), a filter screen (18) being provided at the communication opening (17); an liner pipe (4) being provided in the cavity channel (11), one end of the liner pipe (4) being inserted into the inner hole channel (15) through the inner insertion opening (16), the other end of the liner pipe (4) being provided with a connection section to be inserted into the flexible pipe (2), the connection section being provided with at least one bulging part (41), and a length of the liner pipe (4) other than the connecting section is in a range from 0.1 to 50 mm.

2. The pipe joint of claim 1, **characterised in that** the outer hole channel (12) is a threaded hole.

3. The pipe joint of claim 1, **characterised in that** the flexible pipe (2) is a high-pressure braided pipe including three layers, the inner and outer layers are plastic pipes, and the intermediate layer is a braided mesh pipe.

4. The pipe joint of claim 1, **characterised in that** the rigid pipe (3) is a metal pipe.

5. A method for using a pipe j oint of any one of claims 1 to 4, wherein the method comprises following steps:
Step 1: inserting a connecting section of a liner pipe (4) into a flexible pipe (2);
Step 2: inserting the flexible pipe (2) and the liner pipe (4) together into a cavity channel (11) of a joint body (1) from a first outer insertion opening (13), and at the same time inserting an end of the liner pipe (4) outside the flexible pipe (2) into an inner hole channel (15) of the joint body (1) from an inner insertion opening (16);
Step 3: squeezing to deform the joint body (1), and compressing the flexible pipe (2) so that an outer wall of the flexible pipe (2) closely contacts with a side wall of the cavity channel (11); and
Step 4: inserting a rigid pipe (3) into an outer hole channel (14) of the joint body (1) from a second outer insertion opening (14), and then fixing the rigid pipe (3) by circumferential welding to complete connection of the rigid pipe (3) and the flexible pipe (2).

## Patentansprüche

1. Rohrverbindung, wobei die Rohrverbindung einen Verbindungskörper (1) umfasst, in dessen Inneren ein Hohlkanal (11) und ein äußerer Bohrungskanal (12) vorgesehen sind, wobei der Hohlkanal (11) an einem Ende des Verbindungskörpers (1) eine erste äußere Einführöffnung (13) zum Einführen eines anzuschließenden flexiblen Rohrs (2) bildet und der äußere Bohrungskanal (12) am anderen Ende des Verbindungskörpers (1) eine zweite äußere Einführöffnung (14) zum Einführen eines anzuschließenden starren Rohrs (3) bildet;
ein innerer Bohrungskanal (15) ferner zwischen dem Hohlkanal (11) und dem äußeren Bohrungskanal (12) verbunden ist, wobei der innere Bohrungskanal (15) eine innere Einführöffnung (16) an einem innersten Ende des Hohlkanals (11) bildet und eine Verbindungsöffnung (17) an einem innersten Ende des äußeren Bohrungskanals (12) bildet, ein Filtersieb (18) an der Verbindungsöffnung (17) vorgesehen ist; ein Auskleidungsrohr (4) im Hohlkanal (11) vorgesehen ist, ein Ende des Auskleidungsrohrs (4) in den inneren Bohrungskanal (15) durch die innere Einführöffnung (16) eingeführt wird, das andere Ende des Auskleidungsrohrs (4) mit einem Verbindungsabschnitt zum Einführen in das flexible Rohr (2) versehen ist, der Verbindungsabschnitt mit mindestens einem Wölbungsteil (41) versehen ist und eine Länge des Auskleidungsrohrs (4) ohne den Verbindungsabschnitt in einem Bereich von 0,1 bis 50 mm liegt.

2. Rohrverbindung nach Anspruch 1, **dadurch gekennzeichnet, dass** der äußere Bohrungskanal (12) eine Gewindebohrung ist.

3. Rohrverbindung nach Anspruch 1, **dadurch gekennzeichnet, dass** das flexible Rohr (2) ein Hochdruck-Geflechtrohr ist, das drei Schichten beinhaltet, wobei die innere und die äußere Schicht Plastikrohre sind und die Zwischenschicht ein Maschengeflechtrohr ist.

4. Rohrverbindung nach Anspruch 1, **dadurch gekennzeichnet, dass** das starre Rohr (3) ein Metallrohr ist.

5. Verfahren zum Verwenden einer Rohrverbindung nach einem der Ansprüche 1 bis 4, wobei das Verfahren die folgenden Schritte umfasst:
Schritt 1: Einführen eines Verbindungsabschnitts eines Auskleidungsrohrs (4) in ein flexibles Rohr (2);
Schritt 2: Einführen des flexiblen Rohrs (2) und des Auskleidungsrohrs (4) zusammen in einen Hohlkanal (11) eines Verbindungskörpers (1) von einer ersten äußeren Einführöffnung (13) und gleichzeitiges Einführen ein Ende des Auskleidungsrohrs (4) außerhalb des flexiblen Rohrs (2) in einen inneren Bohrungskanal (15) des Verbindungskörpers (1) von einer inneren Einführöffnung (16);
Schritt 3: Zusammendrücken, um den Verbindungskörper (1) zu deformieren, und Komprimieren des flexiblen Rohrs (2), sodass eine Außenwand des flexiblen Rohrs (2) eine Seitenwand des Hohlkanals (11) eng berührt; und
Schritt 4: Einführen eines starren Rohrs (3) in einen äußeren Bohrungskanal (14) des Verbindungskörpers (1) von einer zweiten äußeren Einführöffnung (14) und danach Fixieren des starren Rohrs (3) durch Umfangsschweißen, um eine Verbindung des starren Rohrs (3) und des flexiblen Rohrs (2) zu vollenden.

## Revendications

1. Joint de tuyau, dans lequel le joint de tuyau comprend un corps de joint (1) au sein duquel un canal de cavité (11) et un canal d'orifice externe (12) sont prévus, le canal de cavité (11) formant à une extrémité du corps de joint (1) une première ouverture d'insertion externe (13) pour l'insertion d'un tuyau flexible (2) devant être connecté, et le canal d'orifice externe (12) formant à l'autre extrémité du corps de joint (1) une seconde ouverture d'insertion externe (14) pour l'insertion d'un tuyau rigide (3) devant être connecté ;
un canal d'orifice interne (15) est en outre en communication entre le canal de cavité (11) et le canal d'orifice externe (12), le canal d'orifice interne (15) formant une ouverture d'insertion interne (16) à une extrémité interne du canal de cavité (11) et formant une ouverture de communication (17) à une extrémité interne du canal d'orifice externe (12), un filtre à tamis (18) étant prévu au niveau de l'ouverture de communication (17) ; une conduite (4) étant prévue dans le canal de cavité (11), une extrémité de la conduite (4) étant insérée dans le canal d'orifice interne (15) à travers l'ouverture d'insertion interne (16), l'autre extrémité de la conduite (4) étant pourvue d'une section de connexion devant être insérée dans le tuyau flexible (2), la section de connexion étant pourvue d'au moins une partie de renflement (41), et une longueur de la conduite (4) autre que la section de connexion est dans une plage de 0,1 à 50 mm.

2. Joint de tuyau selon la revendication 1, **caractérisé en ce que** le canal d'orifice externe (12) est un orifice fileté.

3. Joint de tuyau selon la revendication 1, **caractérisé en ce que** le tuyau flexible (2) est un tuyau tressé haute pression incluant trois couches, les couches interne et externe sont des tuyaux en plastique, et la couche intermédiaire est un tuyau en maille tressée.

4. Joint de tuyau selon la revendication 1, **caractérisé en ce que** le tuyau rigide (3) est un tuyau métallique.

5. Procédé destiné à utiliser un joint de tuyau selon l'une quelconque des revendications 1 à 4, dans lequel le procédé comprend les étapes suivantes :
Étape 1 : insérer une section de connexion d'une conduite (4) dans un tuyau flexible (2) ;
Étape 2 : insérer le tuyau flexible (2) et la conduite (4) ensemble dans un canal de cavité (11) d'un corps de joint (1) depuis une première ouverture d'insertion externe (13), et insérer en même temps une extrémité de la conduite (4) en dehors du tuyau flexible (2) dans un canal d'orifice interne (15) du corps de joint (1) depuis une ouverture d'insertion interne (16) ;
Étape 3 : presser pour déformer le corps de joint (1), et comprimer le tuyau flexible (2) de sorte qu'une paroi externe du tuyau flexible (2) vient en contact étroit avec une paroi latérale du canal de cavité (11) ; et
Étape 4 : insérer un tuyau rigide (3) dans un canal d'orifice externe (14) du corps de joint (1) depuis une seconde ouverture d'insertion externe (14), puis fixer le tuyau rigide (3) par soudure circonférentielle pour achever la connexion du tuyau rigide (3) et du tuyau flexible (2).
